# EUROPEAN PATENT APPLICATION

(11) **EP 4 465 000 A1**
(43) Date of publication of application: **20.11.2024**
(21) Application number: 23208423.6
(22) Date of filing: 08.11.2023
(51) Int. Cl.: G01K 7/18

(54) **TEMPERATURE MEASUREMENT ASSEMBLY AND COOKING APPARATUS**

(30) Priority: 18.05.2023 CN 202310561228; 18.05.2023 CN 202321202419 U
(71) Applicant: Foshan Shunde Midea Electrical Heating Appliances Manufacturing Co., Ltd., Foshan, Guangdong 528311 (CN)
(72) Inventor: LI, Xiaohui, Foshan, 528311 (CN); ZENG, Xianguang, Foshan, 528311 (CN); LIU, Wenhua, Foshan, 528311 (CN); CHEN, Wei, Foshan, 528311 (CN); KONG, Jieying, Foshan, 528311 (CN); Zeng, Yongjian, Foshan, 528311 (CN)
(74) Representative: RGTH

(57) **Abstract**

Provided are a temperature measurement assembly and a cooking apparatus. The temperature measurement assembly includes: a bearing plate, where a first side of the bearing plate is provided with a bearing region, and a second side of the bearing plate is provided with a plurality of temperature measurement regions; a heating coil arranged on the second side of the bearing plate; and a control plate arranged on a side of the heating coil away from the bearing plate, where the control plate and the bearing plate are spaced; where each temperature measurement region is filled with a resistance wire electrically connected to the control plate, projections of any two temperature measurement regions on the bearing plate do not overlap, and the resistance wire in any temperature measurement region is not connected to the resistance wire in another adjacent temperature measurement region. According to the embodiment of the present disclosure, since it is defined that the resistance wire in each temperature measurement region is not connected to the resistance wires in the other temperature measurement regions, an area of a corresponding loop is greatly reduced, that is, an area of a pattern formed after the resistance wires are directly connected end to end is reduced, electromagnetic interference is reduced, and measurement accuracy is improved.

## Description

The present disclosure claims the benefit of priority to Chinese Patent Application No. 202310561228.7, filed with the China National Intellectual Property Administration on May 18, 2023 and entitled "Temperature measurement assembly and cooking apparatus", and Chinese Patent Application No. 202321202419.6, filed with the China National Intellectual Property Administration on May 18, 2023 and entitled "Temperature measurement assembly and cooking apparatus".

### FIELD

The present disclosure relates to the field of temperature measurement devices, and particularly relates to a temperature measurement assembly and a cooking apparatus.

### BACKGROUND

In order to measure the temperature of a cooking apparatus in the related art, a temperature measurement component is fixed on a support and then closely attached to cookware requiring temperature measurement or a table board, which measures temperature in a limited range. Moreover, if over-high temperature occurs to a position that is misaligned with the temperature measurement component, the corresponding temperature may not be collected in time, influencing normal operation.

### SUMMARY

The present disclosure aims to solve at least one of the problems in the prior art or the related art.

In view of this, an embodiment of a first aspect of the present disclosure provides a temperature measurement assembly.

An embodiment of a second aspect of the present disclosure provides a cooking apparatus.

In order to realize the above objective, an embodiment of a first aspect of the present disclosure provides a temperature measurement assembly. The temperature measurement assembly comprises: a bearing plate, where a first side of the bearing plate is provided with a bearing region, and a second side of the bearing plate is provided with a plurality of temperature measurement regions; a heating coil arranged on the second side of the bearing plate; and a control plate arranged on a side, away from the bearing plate, of the heating coil, where the control plate and the bearing plate are spaced; where each temperature measurement region is filled with a resistance wire electrically connected to the control plate, projections of any two temperature measurement regions on the bearing plate do not overlap, and the resistance wire in any temperature measurement region is not connected to the resistance wire in an adjacent temperature measurement region.

The temperature measurement assembly provided in the present disclosure mainly comprises a bearing plate, a heating coil and a control plate that are spaced, the bearing plate bears a cooking utensil, and the heating coil heats the cooking utensil and internal food materials can be cooked. In addition, the control plate is arranged on a side, in an embodiment a side away from the cooking utensil, of the bearing plate, that is, an outer surface of the bearing plate bears the cooking utensil, and a side of an inner surface is sequentially provided with the heating coil and the control plate. A plurality of temperature measurement regions are arranged on an inner side of the bearing plate, and a temperature in each temperature measurement region is measured by the resistance wire electrically connected to the control plate. Therefore, by obtaining a resistance value of the resistance wire in the temperature measurement region and according to a corresponding relation between a resistance value and a temperature, a temperature in a specific region on the bearing plate can be measured. Particularly, the resistance wire in the present disclosure is divided into a plurality of independent temperature measurement regions, that is, projections of any two temperature measurement regions on the bearing plate do not overlap. Therefore, by obtaining information of the resistance wire with which each temperature measurement region is filled, a temperature value or a temperature change value of each temperature measurement region can be determined, and position accuracy of temperature measurement on the bearing plate is greatly improved.

It should be emphasized that in the present disclosure, after two ends of the projection of the resistance wire in each temperature measurement region on the bearing plate are connected, a loop is formed. Since the resistance wire is located between the heating coil and the bearing plate, during heating, an alternating magnetic field generated by the heating coil interferes in the resistance wire, and measurement accuracy has deviation. According to the embodiment, since it is defined that the resistance wire in each temperature measurement region is not connected to the resistance wires in the other temperature measurement regions, an area of a corresponding loop is greatly reduced, that is, an area of a pattern formed after the resistance wires are directly connected end to end is reduced, electromagnetic interference is reduced, and measurement accuracy is improved.

Further, the two ends of the resistance wire connected to the control plate are located at the same position, and assembly is convenient. Moreover, after a fault occurs, operation stations are centralized during maintenance, and maintenance operation is convenient.

Certainly, the two ends of the resistance wire connected to the control plate may be located at different positions, as long as assembly is convenient.

Further, the temperature measurement region may be in a ring shape in an inner-outer nested manner, or may be in a fan shape in a circumferential direction.

It should be noted that by distributing the resistance wires in different temperature measurement regions, a temperature in each temperature measurement region can be obtained according to a resistance value of the resistance wire arranged in this region; and by using the planar temperature measurement assembly, a temperature measurement effect can be greatly improved.

The resistance wire is made of a temperature sensitive material, and when a temperature changes, a resistance value of the resistance wire further changes.

In some embodiments, the resistance wire in each temperature measurement region is led out with two lead terminals, one of which is grounded, and the other is electrically connected to the control plate.

In the embodiment, a resistance wire is arranged each temperature measurement region. In order to conveniently lead wires, two ends of each resistance wire are lead terminals, one of the lead terminals is electrically connected to the control plate, and the other one is grounded, that is, has a potential of 0. Through the above wire connection method, the number of wire harnesses can be greatly reduced, and wire arrangement is convenient.

It can be understood that the plurality of resistance wires are connected in parallel, and the resistance values of all the resistance wires independently change, and do not affect each other.

In some embodiments, the resistance wire in each temperature measurement region comprises a first wire and a second wire that are at least partially parallel to each other, the first wire is connected to the second wire, an end of the first wire away from the second wire and an end of the second wire away from the first wire of the resistance wire in each temperature measurement region form the two lead terminals, and the first wire and/or the second wire are/is arranged in a serpentine pattern circumferentially along the bearing plate.

In the embodiment, in each temperature measurement region, the resistance wire comprises a first wire and a second wire that are connected, and part of the structure of the second wire is parallel to part of the structure of the first wire, and processing and routing are convenient. Further, by defining an extension direction of the wire, at least one of the first wire and the second wire mainly extends in the circumferential direction and runs inwards or outwards in a serpentine pattern radially. It can be understood that the temperature measurement region is in a fan shape, and an extension length on a radial inner side in the circumferential direction is less than an extension length on a radial outer side in the circumferential direction.

In some embodiments, the resistance wire in each temperature measurement region is arranged in a serpentine pattern radially along the bearing plate.

In the embodiment, routing of the resistance wire is mainly performed in the radial direction. The extension direction of the wire is defined, that is, a main part of the resistance wire extends in the radial direction, and runs inwards or outwards in a serpentine pattern circumferentially. It can be understood that the temperature measurement region is in a fan shape, and when the resistance wire moves in the circumferential direction, in a case of a radial part of a wire at the same circumferential position, an extension length of an end located on a radial inner side is less than an extension length of an end located on a radial outer side in the circumferential direction.

It should be noted that an arrangement form of the resistance wire is limited. The resistance wire in each temperature measurement region is arranged in a serpentine pattern, and the temperature measurement region is filled with the resistance wire, and a temperature in the temperature measurement region can be measured.

It can be understood that operation is simple and subsequent connection to the control plate is convenient by using the serpentine pattern arrangement mode.

In some embodiments, the temperature measurement assembly further comprises a connection pad arranged on the second side of the bearing plate, where the connection pad is respectively electrically connected to the two lead terminals within each temperature measurement region.

In the embodiment, the connection pad is arranged on an inner side, that is, the second side of the bearing plate, and may be electrically connected to all the lead terminals and the control plate can conveniently obtain resistance values of the resistance wires in different temperature measurement regions, the temperatures in the temperature measurement regions can be independently measured, and accuracy of temperature measurement is greatly improved.

It can be understood that the two lead terminals of the resistance wire in each temperature measurement region are located at the approximately same position, and are staggered only by a short distance; and by the structure of the connection pad, rapid assembly can be implemented.

Further, it is defined that a plurality of temperature measurement regions are arranged in a nested manner, that is, are arranged in the radial direction of the bearing plate, and each temperature measurement region is in a ring shape, and each temperature measurement region corresponds to one ring-shaped region. The above arrangement mode confirms to a temperature change for heating of a cooking utensil, and when a temperature is abnormal, a temperature change in a specific temperature measurement region can be detected.

Further, the plurality of temperature measurement regions are in a concentric ring shape.

Further, the plurality of temperature measurement regions are not concentrically arranged.

In some embodiments, the grounded lead terminals of all the temperature measurement regions are connected to one welding spot.

In the embodiment, the grounded terminals of all the temperature measurement regions share one welding spot, and the number of welding spots is reduced. In further embodiment, in a case of four temperature measurement regions, theoretically, there are two welding spots in each temperature measurement region, and a total of 8 welding spots are required. Through the integrated design in the solution, only a total of 5 welding spots are necessary, temperatures in the four temperature measurement regions can be measured.

In some embodiments, the temperature measurement assembly further comprises a temperature measurement plate arranged on the second side of the bearing plate, where the temperature measurement plate is attached to the bearing plate, a side, facing the bearing plate, of the temperature measurement plate is provided with the plurality of temperature measurement regions and the connection pad.

In the embodiment, the independent temperature measurement plate is arranged on the second side of the bearing plate and the temperature measurement region and the connection pad can be arranged on the temperature measurement plate; the temperature measurement plate is attached to the bearing plate and heat can be transferred to the temperature measurement plate; and a resistance value of the resistance wire is measured and whether the temperature in the temperature measurement region is abnormal can be determined.

In the solution, the independent temperature measurement plate can be directly replaced when a fault occurs, and moreover, the temperature measurement plate and the bearing plate may be made of different materials, and measurement sensitivity is improved.

It can be understood that a heat conductivity coefficient of the material of the temperature measurement plate should be greater than a heat conductivity coefficient of the material of the bearing plate.

In some embodiments, the temperature measurement plate comprises a plurality of temperature measurement sub-plates, each temperature measurement sub-plate is provided with one temperature measurement region, and the plurality of temperature measurement sub-plates are arranged in a circumferential array around a center of the bearing plate.

In this embodiment, the temperature measurement plate is of a separated multi-block structure, that is, comprises a plurality of temperature measurement sub-plates, the plurality of temperature measurement sub-plates are arrange in a circumferential array, and each temperature measurement region corresponds to one circumferential region. The above arrangement mode more conforms to a temperature change for heating of a cooking utensil, that is, conforms to a ring-shaped heating device. Moreover, when circumferential deviation occurs, a temperature change in a specific temperature measurement region can be detected.

It should be emphasized that compared with a single-block structure, when the multi-block structure is heated and deformed, a degree of a heating influence on the multi-block structure is lower; and after the multi-block structure is heated and deformed, a degree of attachment to the bearing plate can be improved, and a temperature measurement effect is improved.

Each temperature measurement sub-plate is provided with one connection pad, and the connection pad is provided with only two welding spots and two ends of a resistance wire located in the temperature measurement sub-plate can be conveniently electrically connected, and a resistance value of the resistance wire can be measured, that is, a temperature in a temperature measurement region can be measured.

In some embodiments, the dimensions of a projection of each of the plurality of temperature measurement regions projected on the bearing plate are compatible with the dimensions of a projection of the heating coil projected on the bearing plate.

In the embodiment, an area of the temperature measurement region and an area of the heating coil are limited and adapted to each other and a better measurement effect can be achieved. Further, an adaptation relation between the temperature measurement region and the heating coil may be that on the bearing plate, the projection corresponding to the temperature measurement region covers the projection corresponding to the heating coil, or the projection corresponding to the heating coil covers the projection corresponding to the temperature measurement region.

The bearing plate may be a microcrystalline glass plate of which a water absorption rate is almost zero, and water is less likely to penetrate the bearing plate, strength is great, and acid resistance and alkali resistance are strong. A base plate may be an electrical insulation plate, and a resistance film cannot be short-circuited; moreover, the base plate may be a thermal insulation plate. When the temperature measurement assembly is placed in an apparatus, the operation temperature of the heating device located on the other side of the base plate in the apparatus may potentially affect a temperature measurement effect of the resistance film. By using the thermal insulation plate, this effect is reduced, thereby temperature measurement accuracy is ensured.

An embodiment of a second aspect of the present disclosure provides a cooking apparatus. The cooking apparatus comprises: a housing; and any one of the temperature measurement assemblies in the first aspect arranged in the housing.

The cooking apparatus provided in the present disclosure comprises a temperature measurement assembly and a housing, and a structure in the temperature measurement assembly can be protected under the action of the housing.

Since the cooking apparatus comprises a temperature measurement assembly, the cooking apparatus has beneficial effects of any one of the temperature measurement assemblies in embodiments of the first aspect, which will not be repeated herein.

The cooking apparatus comprises, but is not limited to, an induction cooker, an electric ceramic stove, an electric cooker and other apparatus of which temperatures of bearing plates are required to be measured and obtained.

An embodiment of another aspect of the present disclosure provides a temperature measurement assembly. The temperature measurement assembly comprises: a bearing plate, where a first side of the bearing plate is provided with a bearing region, and a second side of the bearing plate is provided with a plurality of temperature measurement regions; and a control plate arranged on the second side of the bearing plate, where the control plate and the bearing plate are spaced; where each temperature measurement region is filled with a resistance wire electrically connected to the control plate, projections of any two temperature measurement regions on the bearing plate do not overlap, and a projection of the resistance wire in each temperature measurement region on the bearing plate is in a closed shape.

The temperature measurement assembly provided in the present disclosure mainly comprises a bearing plate and a control plate that are spaced, and the bearing plate bears a cooking utensil. The control plate is arranged on a side, in an embodiment a side away from the cooking utensil, of the bearing plate, that is, an outer surface of the bearing plate bears the cooking utensil, and a side of an inner surface is sequentially provided with the control plate. A plurality of temperature measurement regions are arranged on an inner side of the bearing plate, and a temperature in each temperature measurement region is measured by the resistance wire electrically connected to the control plate. Therefore, by obtaining a resistance value of the resistance wire in the temperature measurement region and according to a corresponding relation between a resistance value and a temperature, a temperature in a specific region on the bearing plate can be measured. Particularly, the resistance wire in the present disclosure is divided into a plurality of independent temperature measurement regions, that is, projections of any two temperature measurement regions on the bearing plate do not overlap. Therefore, by obtaining information of the resistance wire with which each temperature measurement region is filled, a temperature value or a temperature change value of each temperature measurement region can be determined, and position accuracy of temperature measurement on the bearing plate is greatly improved.

It should be emphasized that in the present disclosure, the projection of the resistance wire in each temperature measurement region is defined, in an embodiment, the projection pattern of the resistance wire in each temperature measurement region on the bearing plate is closed, and the two ends of the resistance wire connected to the control plate are located at the same position, and assembly is convenient. Moreover, after a fault occurs, operation stations are centralized during maintenance, and maintenance operation is convenient. It should be supplemented that the pattern delimited by the resistance wire occupies most of a total area of the temperature measurement region. In some embodiment, the area delimited by the resistance wire is greater than 70% of the total area of a single temperature measurement region. Certainly, 70% in the solution is merely an instance, and the specific percentage can be flexibly adjusted from 0% to 100% according to actual use requirements and design requirements.

Further, the temperature measurement region may be in a ring shape in an inner-outer nested manner, or may be in a fan shape in a circumferential direction.

It should be noted that by distributing the resistance wires in different temperature measurement regions, a temperature in each temperature measurement region can be obtained according to a resistance value of the resistance wire arranged in this region; and by using the planar temperature measurement assembly, a temperature measurement effect can be greatly improved.

The resistance wire is made of a temperature sensitive material, and when a temperature changes, a resistance value of the resistance wire further changes.

In some embodiments, the resistance wire in each temperature measurement region is led out with two lead terminals, one of which is grounded, and the other is electrically connected to the control plate.

In the embodiment, a resistance wire is arranged each temperature measurement region. In order to conveniently lead wires, two ends of each resistance wire are lead terminals, one of the lead terminals is electrically connected to the control plate, and the other one is grounded, that is, has a potential of 0. Through the above wire connection method, the number of wire harnesses can be greatly reduced, and wire arrangement is convenient.

It can be understood that the plurality of resistance wires are connected in parallel, and the resistance values of all the resistance wires independently change, and do not affect each other.

In some embodiments, the temperature measurement assembly further comprises a connection pad arranged on the second side of the bearing plate, where the connection pad is electrically connected to the two lead terminals within each temperature measurement region.

In the embodiment, the connection pad is arranged on an inner side, that is, the second side of the bearing plate, and may be electrically connected to all the lead terminals and the control plate can conveniently obtain resistance values of the resistance wires in different temperature measurement regions, the temperatures in the temperature measurement regions can be independently measured, and accuracy of temperature measurement is greatly improved.

It can be understood that the two lead terminals of the resistance wire in each temperature measurement region are located at the approximately same position, and are staggered only by a short distance; and by the structure of the connection pad, rapid assembly can be implemented.

In some embodiments, the plurality of temperature measurement regions are arranged in a ring shape in a radial direction of the bearing plate, and the connection pad is provided with a plurality of welding spots electrically connected to the two lead terminals within each temperature measurement region.

In the embodiment, it is defined that a plurality of temperature measurement regions are arranged in a nested manner, that is, are arranged in the radial direction of the bearing plate, and each temperature measurement region is in a ring shape, and each temperature measurement region corresponds to one ring-shaped region. The above arrangement mode confirms to a temperature change for heating of a cooking utensil, and when a temperature is abnormal, a temperature change in a specific temperature measurement region can be detected.

Further, the plurality of temperature measurement regions are in a concentric ring shape.

Further, the plurality of temperature measurement regions are not concentrically arranged.

In some embodiments, the grounded lead terminals of all the temperature measurement regions are connected to one welding spot.

In the embodiment, the grounded terminals of all the temperature measurement regions share one welding spot, and the number of welding spots is reduced. In further embodiment, in a case of four temperature measurement regions, theoretically, there are two welding spots in each temperature measurement region, and a total of 8 welding spots are required. Through the integrated design in the solution, only a total of 5 welding spots are necessary, temperatures in the four temperature measurement regions can be measured.

In some embodiments, the temperature measurement assembly further comprises a temperature measurement plate arranged on the second side of the bearing plate, where the temperature measurement plate is attached to the bearing plate, a side, facing the bearing plate, of the temperature measurement plate is provided with the plurality of temperature measurement regions and the connection pad.

In the embodiment, the independent temperature measurement plate is arranged on the second side of the bearing plate and the temperature measurement region and the connection pad can be arranged on the temperature measurement plate; the temperature measurement plate is attached to the bearing plate and heat can be transferred to the temperature measurement plate; and a resistance value of the resistance wire is measured and whether the temperature in the temperature measurement region is abnormal can be determined.

In the solution, the independent temperature measurement plate can be directly replaced when a fault occurs, and moreover, the temperature measurement plate and the bearing plate may be made of different materials, and measurement sensitivity is improved.

It can be understood that a heat conductivity coefficient of the material of the temperature measurement plate should be greater than a heat conductivity coefficient of the material of the bearing plate.

In some embodiments, the temperature measurement plate comprises a plurality of temperature measurement sub-plates, each temperature measurement sub-plate is provided with one temperature measurement region, and the plurality of temperature measurement sub-plates are arranged in a circumferential array around a center of the bearing plate.

In this embodiment, the temperature measurement plate is of a separated multi-block structure, that is, comprises a plurality of temperature measurement sub-plates, the plurality of temperature measurement sub-plates are arrange in a circumferential array, and each temperature measurement region corresponds to one circumferential region. The above arrangement mode more conforms to a temperature change for heating of a cooking utensil, that is, conforms to a ring-shaped heating device. Moreover, when circumferential deviation occurs, a temperature change in a specific temperature measurement region can be detected.

It should be emphasized that compared with a single-block structure, when the multi-block structure is heated and deformed, a degree of a heating influence on the multi-block structure is lower; and after the multi-block structure is heated and deformed, a degree of attachment to the bearing plate can be improved, and a temperature measurement effect is improved.

In some embodiments, each temperature measurement sub-plate is provided with one connection pad, and each connection pad is provided with two welding spots respectively electrically connected to the two lead terminals of the temperature measurement region.

In the embodiment, each temperature measurement sub-plate is provided with one connection pad, and the connection pad is provided with only two welding spots and two ends of a resistance wire located in the temperature measurement sub-plate can be conveniently electrically connected, and a resistance value of the resistance wire can be measured, that is, a temperature in a temperature measurement region can be measured.

Further, an arrangement form of the resistance wire is limited. The resistance wire in each temperature measurement region is arranged in a serpentine pattern, and the temperature measurement region is filled with the resistance wire, and a temperature in the temperature measurement region can be measured.

It can be understood that operation is simple and subsequent connection to the first wire and the second wire is convenient by using the serpentine pattern arrangement mode, that is, two radially staggered ends are formed.

The bearing plate may be a microcrystalline glass plate of which a water absorption rate is almost zero, and water is less likely to penetrate the bearing plate, strength is great, and acid resistance and alkali resistance are strong. A base plate may be an electrical insulation plate, and a resistance film cannot be short-circuited; moreover, the base plate may be a thermal insulation plate. When the temperature measurement assembly is placed in an apparatus, the operation temperature of the heating device located on the other side of the base plate in the apparatus may potentially affect a temperature measurement effect of the resistance film. By using the thermal insulation plate, this effect is reduced, thereby temperature measurement accuracy is ensured.

An embodiment of another aspect of the present disclosure provides a cooking apparatus. The cooking apparatus comprises: any one of the above temperature measurement assembles; and a heating coil arranged on a side of a base plate of the temperature measurement assembly away from a bearing plate.

The cooking apparatus provided in the present disclosure comprises a temperature measurement assembly and a heating coil arranged below the temperature measurement assembly, and a cooking utensil on the bearing plate can be heated under the action of the heating coil.

Since the cooking apparatus comprises a temperature measurement assembly, the cooking apparatus has beneficial effects of any one of the temperature measurement assemblies in embodiments of the first aspect, which will not be repeated herein.

The cooking apparatus comprises, but is not limited to, an induction cooker, an electric ceramic stove, an electric cooker and other apparatus of which temperatures of bearing plates are required to be measured and obtained.

Additional aspects and advantages of the present disclosure will become obvious in the following description, or can be known by practice of the present disclosure.

### BRIEF DESCRIPTION OF THE DRAWINGS

Fig. 1 shows a schematic structural diagram of a temperature measurement assembly according to an embodiment of the present disclosure;
Fig. 2 shows a schematic structural diagram of a temperature measurement assembly according to an embodiment of the present disclosure;
Fig. 3 shows a schematic structural diagram of a temperature measurement assembly according to an embodiment of the present disclosure;
Fig. 4 shows a schematic structural diagram of a temperature measurement plate according to an embodiment of the present disclosure;
Fig. 5 shows a schematic structural diagram of a bearing plate according to an embodiment of the present disclosure;
Fig. 6 shows a schematic structural diagram of a temperature measurement assembly according to an embodiment of the present disclosure;
Fig. 7 shows a schematic structural diagram of a cooking apparatus according to an embodiment of the present disclosure;
Fig. 8 shows a schematic structural diagram of a temperature measurement assembly according to an embodiment of the present disclosure;
Fig. 9 shows a schematic structural diagram of a temperature measurement assembly according to an embodiment of the present disclosure;
Fig. 10 shows a schematic structural diagram of a temperature measurement assembly according to an embodiment of the present disclosure;
Fig. 11 shows a schematic structural diagram of a bearing plate according to an embodiment of the present disclosure;
Fig. 12 shows a schematic structural diagram of a cooking apparatus according to an embodiment of the present disclosure; and
Fig. 13 shows a schematic structural diagram of a cooking apparatus according to an embodiment of the present disclosure.

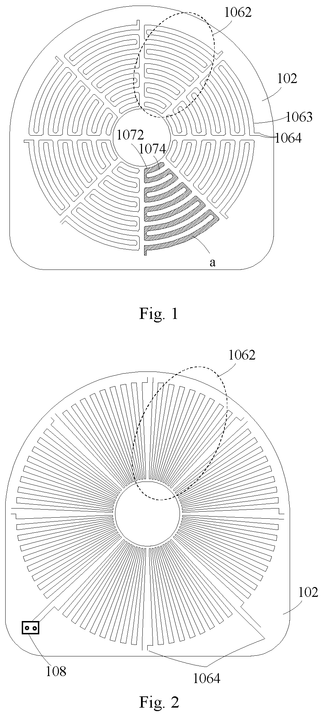

In Figs. 1-13, corresponding relations between reference numerals and component names are as follows:
100: temperature measurement assembly, 102: bearing plate, 1022: bearing region, 104: temperature measurement plate, 1042: temperature measurement sub-plate, 1062: temperature measurement region, 1063: resistance wire, 1064: lead terminal, 1072: first wire, 1074: second wire, 108: connection pad, 1082: welding spot, 112: control plate, a: loop area,
200: cooking apparatus, 202: heating coil, 204: housing, 2042: bottom housing, and 2044: upper cover.

### DETAILED DESCRIPTION OF THE INVENTION

In order to more clearly understand the above objective, features and advantages of embodiments of the present disclosure, the embodiments of the present disclosure will be further described in detail below in combination with accompanying drawings and particular embodiments. It should be noted that embodiments of the present disclosure and features in the embodiments can be combined with one another if there is no conflict.

Many specific details are set forth in the following description to facilitate full understanding of the present disclosure, but embodiments of the present disclosure can further be implemented in other ways different from those described herein. Therefore, the scope of protection of the present disclosure is not limited to particular embodiments disclosed below.

Some embodiments of the present disclosure will be described below with reference to Figs. 1-13.

As shown in Figs. 1, 3 and 5, the embodiment provides a temperature measurement assembly 100. The temperature measurement assembly mainly comprises a bearing plate 102, a heating coil 202 and a control plate 112 that are spaced, a bearing region 1022 of the bearing plate 102 is configured to bear a cooking utensil, and the heating coil 202 is configured to heat the cooking utensil and internal food materials can be cooked. In addition, the control plate 112 is arranged on a side, in an embodiment a side away from the cooking utensil, of the bearing plate 102, that is, an outer surface of the bearing plate 102 is configured to bear the cooking utensil, and a side of an inner surface is provided with the control plate. A plurality of temperature measurement regions 1062 are arranged on an inner side of the bearing plate 102, and a temperature in each temperature measurement region 1062 is measured by the resistance wire 1063 electrically connected to the control plate. Therefore, by obtaining a resistance value of the resistance wire 1063 in the temperature measurement region 1062 and according to a corresponding relation between a resistance value and a temperature, a temperature in a specific region on the bearing plate 102 can be measured. Particularly, the resistance wire 1063 in the present disclosure is divided into a plurality of independent temperature measurement regions 1062, that is, projections of any two temperature measurement regions 1062 of the bearing plate 102 do not overlap. Therefore, by obtaining information of the resistance wire 1063 with which each temperature measurement region 1062 is filled, a temperature value or a temperature change value of each temperature measurement region 1062 can be determined, and position accuracy of temperature measurement on the bearing plate 102 is greatly improved.

It should be emphasized that in the present disclosure, after two ends of the projection of the resistance wire 1063 in each temperature measurement region 1062 on the bearing plate 102 are connected, a loop is formed. Since the resistance wire 1063 is located between the heating coil 202 and the bearing plate 102, during heating, an alternating magnetic field generated by the heating coil 202 interferes in the resistance wire 1063, and measurement accuracy has deviation. According to the embodiment, since it is defined that the resistance wire 1063 in each temperature measurement region 1062 is not connected to the resistance wires 1063 in the other temperature measurement regions 1062, area a of a corresponding loop is greatly reduced, that is, an area of a pattern formed after the resistance wires 1063 are directly connected end to end is reduced, electromagnetic interference is reduced, and measurement accuracy is improved.

Further, the two ends of the resistance wire 1063 connected to the control plate 112 are located at the same position, and assembly is convenient. Moreover, after a fault occurs, operation stations are centralized during maintenance, and maintenance operation is convenient.

Further, the temperature measurement region 1062 may be in a ring shape in an inner-outer nested manner, or may be in a fan shape in a circumferential direction.

It should be noted that by distributing the resistance wires 1063 in different temperature measurement regions 1062, a temperature in each temperature measurement region 1062 can be obtained according to a resistance value of the resistance wire 1063 arranged in this region; and by using the planar temperature measurement assembly 100, a temperature measurement effect can be greatly improved.

The resistance wire 1063 is made of a temperature sensitive material, and when a temperature changes, a resistance value of the resistance wire further changes.

Further, the resistance wire in each temperature measurement region 1062 is arranged in a serpentine pattern, and the temperature measurement region 1062 is filled with the resistance wire, and a temperature in the temperature measurement region 1062 can be measured. It can be understood that operation is convenient by using the serpentine pattern arrangement mode.

A resistance wire 1063 is arranged each temperature measurement region 1062. In order to conveniently lead wires, as shown in Fig. 2, two ends of each resistance wire 1063 are lead terminals 1064, one of the lead terminals is configured to be electrically connected to the control plate, and the other one is configured to be grounded, that is, has a potential of 0. Through the above wire connection mode, the number of wire harnesses can be greatly reduced, and wire arrangement is convenient.

It can be understood that the plurality of resistance wires 1063 are connected in parallel, and the resistance values of all the resistance wires 1063 independently change, and do not affect each other.

In an embodiment, in each temperature measurement region 1062, the resistance wire 1063 comprises a first wire 1072 and a second wire 1074 that are connected, and part of the structure of the second wire 1074 is parallel to part of the structure of the first wire 1072, and processing and routing are convenient. Further, by defining an extension direction of the wire, at least one of the first wire 1072 and the second wire 1074 mainly extends in the circumferential direction and runs inwards or outwards in a serpentine pattern radially. It can be understood that the temperature measurement region 1062 is in a fan shape, and an extension length on a radial inner side in the circumferential direction is less than an extension length on a radial outer side in the circumferential direction.

Further, the first wire 1072 and the second wire 1074 each have a wire width of 0.01 mm - 5mm and a wire thickness of 0.01 mm - 5 mm.

In some embodiments, the wire width is 0.3 mm and the wire thickness is 0.5 mm, that is, the wire has a cross section of 0.3 mm × 0.5 mm.

The resistance wire 1063 may be formed by directly laying metal paste of which resistance increases with temperature, or by directly arranging an independent metal wire.

Furthermore, the resistance wire may be made of a non-metallic material, as long as within a temperature range to be measured, a change curve of resistivity of the material with temperature has monotonicity (the resistivity increases as a temperature increases; or the resistivity decreases as a temperature increases).

In an embodiment, 1-24 temperature measurement regions 1062 may be arranged, and the plurality of temperature measurement regions may be uniformly distributed with equal angles, that is, a central angle corresponding to each temperature measurement region 1062 is 360°/the number of the temperature measurement regions 1062.

In another embodiment, routing of the resistance wire 1063 is mainly performed in the radial direction. The extension direction of the wire is defined, that is, a main part of the resistance wire 1063 extends in the radial direction, and runs inwards or outwards in a serpentine pattern circumferentially. It can be understood that the temperature measurement region 1062 is in a fan shape, and when the resistance wire 1063 moves in the circumferential direction, in a case of a radial part of a wire at the same circumferential position, an extension length of an end located on a radial inner side is less than an extension length of an end located on a radial outer side in the circumferential direction.

It should be noted that an arrangement form of the resistance wire 1063 is limited. The resistance wire in each temperature measurement region 1062 is arranged in a serpentine pattern, and the temperature measurement region 1062 is filled with the resistance wire, and a temperature in the temperature measurement region 1062 can be measured.

It can be understood that operation is simple and subsequent connection to the control plate 112 is convenient by using the serpentine pattern arrangement mode.

Further, the connection pad 108 is arranged on an inner side, that is, the second side, of the bearing plate 102, and may be electrically connected to all the lead terminals 1064 and the control plate can conveniently obtain resistance values of the resistance wires 1063 in different temperature measurement regions 1062, the temperatures in the temperature measurement regions 1062 can be independently measured, and accuracy of temperature measurement is greatly improved.

It can be understood that the two lead terminals 1064 of the resistance wire 1063 in each temperature measurement region 1062 are located at the approximately same position, and are staggered only by a short distance; and by the structure of the connection pad 108, rapid assembly can be implemented.

In a particular embodiment, it is defined that a plurality of temperature measurement regions 1062 are arranged in a nested manner, that is, are arranged in the radial direction of the bearing plate 102, and each temperature measurement region 1062 is in a ring shape, and each temperature measurement region 1062 corresponds to one ring-shaped region. The above arrangement mode confirms to a temperature change for heating of a cooking utensil, and when a temperature is abnormal, a temperature change in a specific temperature measurement region 1062 can be detected.

Further, the plurality of temperature measurement regions 1062 are in a concentric ring shape.

Further, the plurality of temperature measurement regions 1062 are not concentrically arranged.

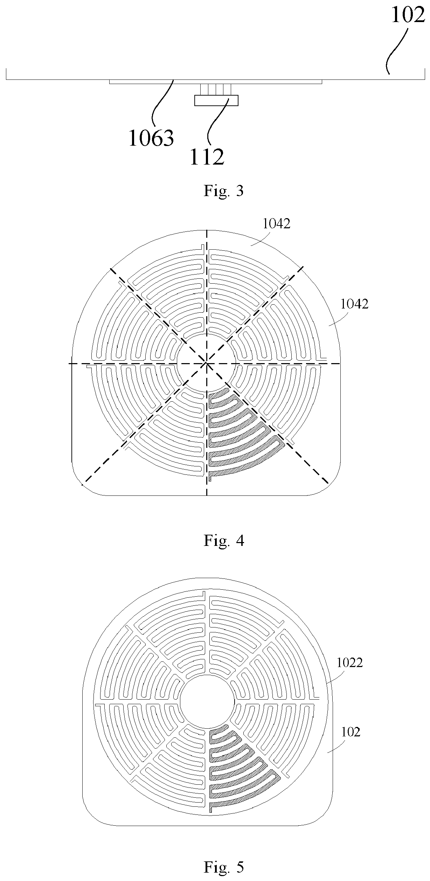

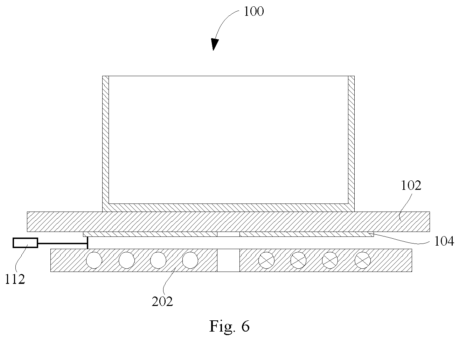

In another embodiment, as shown in Figs. 4 and 6, the independent temperature measurement plate 104 is arranged on the second side of the bearing plate 102 and the temperature measurement region 1062 and the connection pad 108 can be arranged on the temperature measurement plate 104; the temperature measurement plate 104 is attached to the bearing plate 102 and heat can be transferred to the temperature measurement plate 104; and a resistance value of the resistance wire 1063 is measured and whether the temperature of the temperature measurement region 1062 is abnormal can be determined.

In the solution, the independent temperature measurement plate 104 can be directly replaced when a fault occurs, and moreover, the temperature measurement plate 104 and the bearing plate 102 may be made of different materials, and measurement sensitivity is improved.

It can be understood that a heat conductivity coefficient of the material of the temperature measurement plate 104 should be greater than a heat conductivity coefficient of the material of the bearing plate 102.

Furthermore, as shown in Fig. 4, the temperature measurement plate 104 is of a separated multi-block structure, that is, comprises a plurality of temperature measurement sub-plates 1042, the plurality of temperature measurement sub-plates 1042 are arrange in a circumferential array, and each temperature measurement region 1062 corresponds to one circumferential region. The above arrangement mode more conforms to a temperature change for heating of a cooking utensil, that is, conforms to a ring-shaped heating device. Moreover, when circumferential deviation occurs, a temperature change in a specific temperature measurement region 1062 can be detected.

It should be emphasized that compared with a single-block structure, when the multi-block structure is heated and deformed, a degree of a heating influence on the multi-block structure is lower; and after the multi-block structure is heated and deformed, a degree of attachment to the bearing plate 102 can be improved, and a temperature measurement effect is improved.

On the basis of any one of the above embodiments, an area of the temperature measurement region 1062 and an area of the heating coil 202 are limited and adapted to each other and a better measurement effect can be achieved. Further, an adaptation relation between the temperature measurement region and the heating coil may be that on the bearing plate 102, the projection corresponding to the temperature measurement region 1062 covers the projection corresponding to the heating coil 202, or the projection corresponding to the heating coil 202 covers the projection corresponding to the temperature measurement region 1062.

It can be understood that the area of the temperature measurement region 1062 equals the area of the heating coil 202. Certainly, the area of the temperature measurement region 1062 can be greater than or less than the area of the heating coil 202 within a certain range.

On the basis of any one of the above embodiments, the bearing plate 102 may be a microcrystalline glass plate of which a water absorption rate is almost zero, and water is less likely to penetrate the bearing plate, strength is great, and acid resistance and alkali resistance are strong.

On the basis of any one of the above embodiments, the bearing plate 102 may be an electrical insulation plate, and a possibility of a short circuit is reduced.

On the basis of any one of the above embodiments, the bearing plate 102 may be a thermal insulation plate. When the temperature measurement assembly 100 is placed in an apparatus, the operation temperature of the heating device located on the other side of the bearing plate 102 in the apparatus may potentially affect a temperature measurement effect. By using the thermal insulation plate, this effect is reduced, thereby temperature measurement accuracy is ensured.

On the basis of any one of the above embodiments, the bearing plate 102 may be an electrical insulation and thermal insulation plate, which can have the above two advantages.

The bearing plate 102 may be a high borosilicate glass plate, a bulk molding compound (BMC) face plate, etc. Although temperature resistance of the face plate is poor, and is lower than that of the microcrystalline glass plate, cost is lower. Therefore, through the arrangement of the resistance wire in any one of the above embodiments, accuracy and timeliness of temperature measurement can be greatly improved, that is, measurement and feedback of a face plate temperature are more accurate, and cost can be reduced under the condition that accuracy of temperature measurement is ensured.

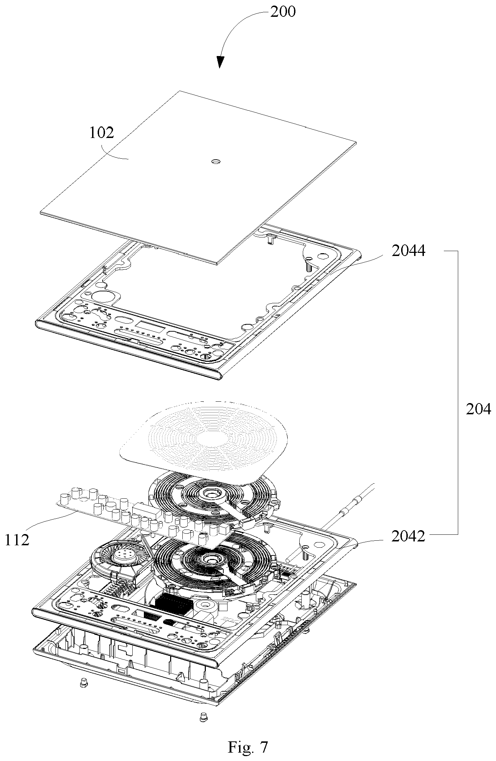

As shown in Fig. 7, the embodiment provides a cooking apparatus 200. The cooking apparatus comprises a temperature measurement assembly 100 and a heating coil 202 arranged below the temperature measurement assembly 100, and a cooking utensil on the bearing plate 102 can be heated under the action of the heating coil 202.

Since the cooking apparatus 200 comprises a temperature measurement assembly 100, the cooking apparatus has beneficial effects of any one of the temperature measurement assemblies 100 in embodiments of the first aspect, which will not be repeated herein.

Further, as shown in Fig. 7, the housing 204 mainly comprises a bottom housing 2042 and an upper cover 2044 which are detachably connected; the two structures are connected, an accommodation cavity may be formed inside, and a temperature measurement plate, a control plate and other structures may be placed in the accommodation cavity; but the bearing plate is arranged on the other side of the upper cover to play the role of bearing a cooking utensil.

The cooking apparatus 200 comprises, but is not limited to, an induction cooker, an electric ceramic stove, an electric cooker and other apparatus of which temperatures of bearing plates are required to be measured and obtained 102.

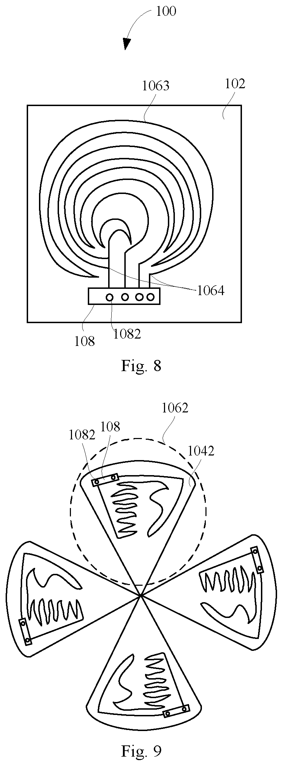

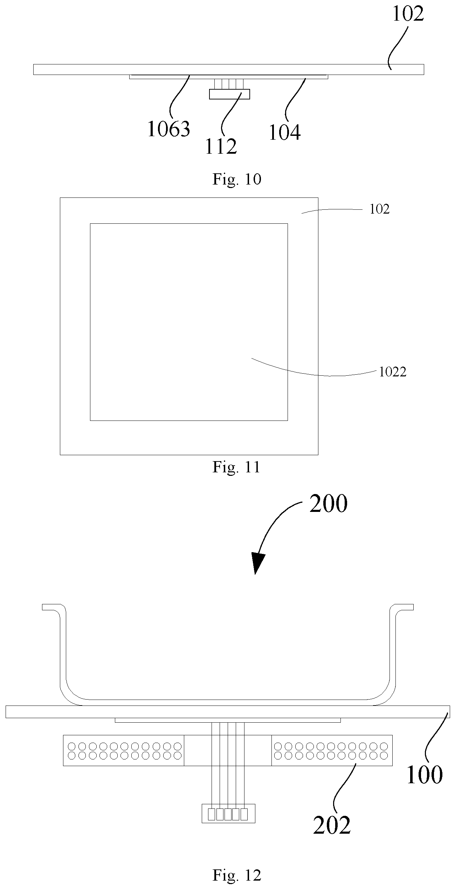

As shown in Figs. 8 and 11, the embodiment provides a temperature measurement assembly 100. The temperature measurement assembly mainly comprises a bearing plate 102 and a control plate 112 that are spaced, and a bearing region 1022 of the bearing plate 102 is configured to bear a cooking utensil. The control plate 112 is arranged on a side, in a further embodiment a side away from the cooking utensil, of the bearing plate 102, that is, an outer surface of the bearing plate 102 is configured to bear the cooking utensil, and a side of an inner surface is provided with the control plate 112. A plurality of temperature measurement regions 1062 are arranged on an inner side of the bearing plate 102, and a temperature in each temperature measurement region 1062 is measured by the resistance wire 1063 electrically connected to the control plate 112. Therefore, by obtaining a resistance value of the resistance wire 1063 in the temperature measurement region 1062 and according to a corresponding relation between a resistance value and a temperature, a temperature in a specific region on the bearing plate 102 can be measured. Particularly, the resistance wire 1063 in the present disclosure is divided into a plurality of independent temperature measurement regions 1062, that is, projections of any two temperature measurement regions 1062 of the bearing plate 102 do not overlap. Therefore, by obtaining information of the resistance wire 1063 with which each temperature measurement region 1062 is filled, a temperature value or a temperature change value of each temperature measurement region 1062 can be determined, and position accuracy of temperature measurement on the bearing plate 102 is greatly improved.

It should be emphasized that as shown in Figs. 8, 9 and 10, in the present disclosure, the projection of the resistance wire 1063 in each temperature measurement region 1062 is defined, in a further embodiment, the projection pattern of the resistance wire 1063 in each temperature measurement region 1062 on the bearing plate 102 is closed, and the two ends of the resistance wire 1063 connected to the control plate 112 are located at the same position, and assembly is convenient. Moreover, after a fault occurs, operation stations are centralized during maintenance, and maintenance operation is convenient. It should be supplemented that the pattern delimited by the resistance wire 1063 occupies most of a total area of the temperature measurement region 1062. In some embodiments, the area delimited by the resistance wire 1063 is greater than 70% of the total area of a single temperature measurement region 1062. Certainly, 70% in the solution is merely an embodiment, and the specific percentage can be flexibly adjusted from 0% to 100% according to actual use requirements and design requirements.

Further, the temperature measurement region 1062 may be in a ring shape in an inner-outer nested manner, or may be in a fan shape in a circumferential direction.

It should be noted that by distributing the resistance wires 1063 in different temperature measurement regions 1062, a temperature in each temperature measurement region 1062 can be obtained according to a resistance value of the resistance wire 1063 arranged in this region; and by using the planar temperature measurement assembly 100, a temperature measurement effect can be greatly improved.

The resistance wire 1063 is made of a temperature sensitive material, and when a temperature changes, a resistance value of the resistance wire further changes.

Further, the resistance wire in each temperature measurement region 1062 is arranged in a serpentine pattern, and the temperature measurement region 1062 is filled with the resistance wire, and a temperature in the temperature measurement region 1062 can be measured. It can be understood that operation is convenient by using the serpentine pattern arrangement mode.

A resistance wire 1063 is arranged each temperature measurement region 1062. In order to conveniently lead wires, two ends of each resistance wire 1063 are lead terminals 1064, one of the lead terminals is configured to be electrically connected to the control plate 112, and the other one is configured to be grounded, that is, has a potential of 0. Through the above wire connection mode, the number of wire harnesses can be greatly reduced, and wire arrangement is convenient.

It can be understood that the plurality of resistance wires 1063 are connected in parallel, and the resistance values of all the resistance wires 1063 independently change, and do not affect each other.

Further, the connection pad 108 is arranged on an inner side, that is, the second side, of the bearing plate 102, and may be electrically connected to all the lead terminals 1064 and the control plate 112 can conveniently obtain resistance values of the resistance wires 1063 in different temperature measurement regions 1062, the temperatures in the temperature measurement regions 1062 can be independently measured, and accuracy of temperature measurement is greatly improved.

It can be understood that the two lead terminals 1064 of the resistance wire 1063 in each temperature measurement region 1062 are located at the approximately same position, and are staggered only by a short distance; and by the structure of the connection pad 108, rapid assembly can be implemented.

In a particular embodiment, as shown in Fig. 8, it is defined that a plurality of temperature measurement regions 1062 are arranged in a nested manner, that is, are arranged in the radial direction of the bearing plate 102, and each temperature measurement region 1062 is in a ring shape, and each temperature measurement region 1062 corresponds to one ring-shaped region. The above arrangement mode confirms to a temperature change for heating of a cooking utensil, and when a temperature is abnormal, a temperature change in a specific temperature measurement region 1062 can be detected.

The grounded terminals of all the temperature measurement regions 1062 share one welding spot 1082, and the number of welding spots 1082 is reduced. In some embodiments, in a case of four temperature measurement regions 1062, theoretically, there are two welding spots 1082 in each temperature measurement region 1062, and a total of 8 welding spots 1082 are required. Through the integrated design in the solution, only a total of 5 welding spots 1082 are necessary, temperatures in the four temperature measurement regions 1062 can be measured.

Further, the plurality of temperature measurement regions 1062 are in a concentric ring shape.

Further, the plurality of temperature measurement regions 1062 are not concentrically arranged.

In another embodiment, as shown in Figs. 9 and 10, the independent temperature measurement plate 104 is arranged on the second side of the bearing plate 102 and the temperature measurement region 1062 and the connection pad 108 can be arranged on the temperature measurement plate 104; the temperature measurement plate 104 is attached to the bearing plate 102 and heat can be transferred to the temperature measurement plate 104; and a resistance value of the resistance wire 1063 is measured and whether the temperature of the temperature measurement region 1062 is abnormal can be determined.

In the solution, the independent temperature measurement plate 104 can be directly replaced when a fault occurs, and moreover, the temperature measurement plate 104 and the bearing plate 102 may be made of different materials, and measurement sensitivity is improved.

It can be understood that a heat conductivity coefficient of the material of the temperature measurement plate 104 should be greater than a heat conductivity coefficient of the material of the bearing plate 102.

Furthermore, as shown in Fig. 9, the temperature measurement plate 104 is of a separated multi-block structure, that is, comprises a plurality of temperature measurement sub-plates 1042, the plurality of temperature measurement sub-plates 1042 are arrange in a circumferential array, and each temperature measurement region 1062 corresponds to one circumferential region. The above arrangement mode more conforms to a temperature change for heating of a cooking utensil, that is, conforms to a ring-shaped heating device. Moreover, when circumferential deviation occurs, a temperature change in a specific temperature measurement region 1062 can be detected.

It should be emphasized that compared with a single-block structure, when the multi-block structure is heated and deformed, a degree of a heating influence on the multi-block structure is lower; and after the multi-block structure is heated and deformed, a degree of attachment to the bearing plate 102 can be improved, and a temperature measurement effect is improved.

Each temperature measurement sub-plate 1042 is provided with one connection pad 108, and the connection pad 108 is provided with only two welding spots 1082, and two ends of a resistance wire 1063 located in the temperature measurement sub-plate 1042 are conveniently electrically connected, and a resistance value of the resistance wire 1063 is measured, that is, a temperature of a temperature measurement region 1062 is measured.

Further, an arrangement form of the resistance wire 1063 is limited. The resistance wire in each temperature measurement region 1062 is arranged in a serpentine pattern, and the temperature measurement region 1062 is filled with the resistance wire, and a temperature in the temperature measurement region 1062 can be measured.

It can be understood that operation is simple and subsequent connection to the first wire and the second wire is convenient by using the serpentine pattern arrangement mode, that is, two radially staggered ends are formed.

On the basis of any one of the above embodiments, the bearing plate 102 may be a microcrystalline glass plate of which a water absorption rate is almost zero, and water is less likely to penetrate the bearing plate, strength is great, and acid resistance and alkali resistance are strong.

On the basis of any one of the above embodiments, the bearing plate 102 may be an electrical insulation plate, and a possibility of a short circuit is reduced.

On the basis of any one of the above embodiments, the bearing plate 102 may be a thermal insulation plate. When the temperature measurement assembly 100 is placed in an apparatus, the operation temperature of the heating device located on the other side of the bearing plate 102 in the apparatus may potentially affect a temperature measurement effect. By using the thermal insulation plate, this effect is reduced, thereby temperature measurement accuracy is ensured.

On the basis of any one of the above embodiments, the bearing plate 102 may be an electrical insulation and thermal insulation plate, which can have the above two advantages.

The bearing plate 102 may be a high borosilicate glass plate, a bulk molding compound (BMC) face plate, etc. Although temperature resistance of the face plate is poor, and is lower than that of the microcrystalline glass plate, cost is lower. Therefore, through the arrangement of the resistance wire in any one of the above embodiments, accuracy and timeliness of temperature measurement can be greatly improved, that is, measurement and feedback of a face plate temperature are more accurate, and cost can be reduced under the condition that accuracy of temperature measurement is ensured.

As shown in Fig. 12, the embodiment provides a cooking apparatus 200. The cooking apparatus comprises a temperature measurement assembly 100 and a heating coil 202 arranged below the temperature measurement assembly 100, and a cooking utensil on the bearing plate 102 can be heated under the action of the heating coil 202.

Since the cooking apparatus 200 comprises a temperature measurement assembly 100, the cooking apparatus has beneficial effects of any one of the temperature measurement assemblies 100 in embodiments of the first aspect, which will not be repeated herein.

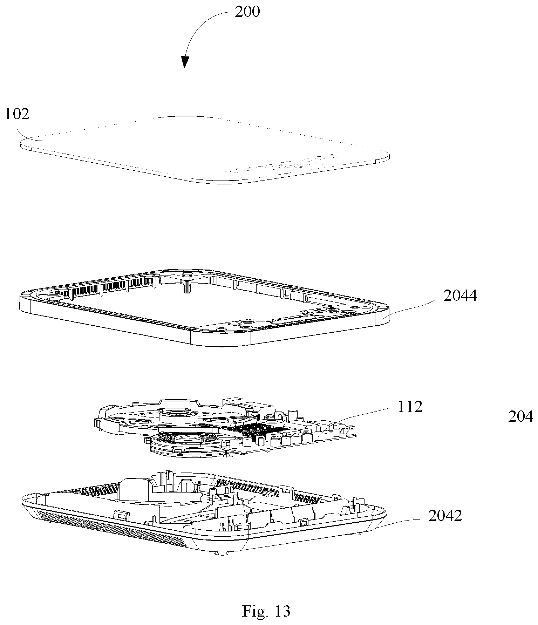

Further, as shown in Fig. 13, the housing 204 mainly comprises a bottom housing 2042 and an upper cover 2044 which are detachably connected; the two structures are connected, an accommodation cavity may be formed inside, and a temperature measurement plate, a control plate and other structures may be placed in the accommodation cavity; but the bearing plate is arranged on the other side of the upper cover to play the role of bearing a cooking utensil.

The cooking apparatus 200 comprises, but is not limited to, an induction cooker, an electric ceramic stove, an electric cooker and other apparatus of which temperatures of bearing plates are required to be measured and obtained 102.

According to the temperature measurement assembly and the cooking apparatus provided in the present disclosure, since it is defined that the resistance wire in each temperature measurement region is not connected to the resistance wires in the other temperature measurement regions, an area of a corresponding loop is greatly reduced, that is, an area of a pattern formed after the resistance wires are directly connected end to end is reduced, electromagnetic interference is reduced, and measurement accuracy is improved.

In the present disclosure, terms "first", "second" and "third" are merely used for a descriptive purpose and cannot be understood as indicating or implying relative importance; and term "plurality" refers to two or above, unless explicitly defined otherwise. Terms "mount", "connected", "connection", "fixed", etc. should be understood in a broad sense. For example, "connection" can be fixed connection, detachable connection or integrated connection; and "connected" can indicate direct connection or indirect connection by using an intermediary medium. Those of ordinary skill in the art can understand the specific meanings of the above terms in the present disclosure according to specific circumstances.

In the description of the present disclosure, it should be understood that orientation or positional relations indicated by terms "up", "down", "left", "right", "front", "rear", etc. are based on orientation or positional relations shown in accompanying drawings, are merely for facilitating the description of the present disclosure and simplifying the description, rather than indicating or implying that a device or unit referred to must have a particular orientation or be constructed and operated in a particular orientation, and therefore cannot be understood as limiting the present disclosure.

In the description, terms "an embodiment", "some embodiments", "particular embodiment", etc. mean that a specific feature, structure, material or characteristic described in combination with the embodiment or instance is included in at least one embodiment or instance of the present disclosure. In the description, the schematic expressions of the above terms do not certainly refer to the same embodiment or instance. Moreover, the specific feature, structure, material or characteristic described can be combined in a suitable manner in any one or more embodiment or instances.

The above embodiments are merely some embodiments of the present disclosure, and are not intended to limit the present disclosure, and those skilled in the art can make various modifications and changes on the present disclosure. Any modification, equivalent substitution, improvement, etc. within the spirit and principles of the present disclosure should fall within the scope of protection of the present disclosure.

## Claims

1. A temperature measurement assembly (100), comprising:
a bearing plate (102), wherein a first side of the bearing plate (102) is provided with a bearing region (1022), and a second side of the bearing plate (102) is provided with a plurality of temperature measurement regions (1062);
a heating coil (202) arranged on the second side of the bearing plate (102); and
a control plate (112) arranged on a side, away from the bearing plate (102), of the heating coil (202), wherein the control plate (112) and the bearing plate (102) are spaced; wherein
each temperature measurement region (1062) is filled with a resistance wire (1063) electrically connected to the control plate (112), projections of any two temperature measurement regions (1042) on the bearing plate (102) do not overlap, and the resistance wire (1063) in any temperature measurement region (1042) is not connected to the resistance wire (1063) in an adjacent temperature measurement region (1042).

2. The temperature measurement assembly (100) according to claim 1, wherein the resistance wire (1063) in each temperature measurement region (1042) is led out with two lead terminals (1064), one of the two lead terminals (1064) is grounded, and the other of the two lead terminals (1064) is electrically connected to the control plate (112).

3. The temperature measurement assembly (100) according to claim 2, wherein the resistance wire (1063) in each temperature measurement region (1042) comprises a first wire (1072) and a second wire (1074) that are at least partially parallel to each other, the first wire (1072) is connected to the second wire (1074), an end of the first wire (1072) away from the second wire (1074) and an end of the second wire (1074) away from the first wire (1072) of the resistance wire (1063) in each temperature measurement region (1042) form the two lead terminals (1064), and
the first wire (1072) and/or the second wire (1074) are/is arranged in a serpentine pattern circumferentially along the bearing plate (102); or wherein the resistance wire (1063) in each temperature measurement region (1042) is arranged in a serpentine pattern radially along the bearing plate (102).

4. The temperature measurement assembly (100) according to claim 2, further comprising:
a connection pad (108) arranged on the second side of the bearing plate (102), wherein the connection pad (108) is respectively electrically connected to the two lead terminals (1064) within each temperature measurement region (1042).

5. The temperature measurement assembly (100) according to claim 4, further comprising:
a temperature measurement plate (104) arranged on the second side of the bearing plate (102), wherein the temperature measurement plate (104) is attached to the bearing plate (102), a side, facing the bearing plate (102), of the temperature measurement plate (104) is provided with the plurality of temperature measurement regions (1042) and the connection pad (108); wherein preferably the temperature measurement plate (104) comprises a plurality of temperature measurement sub-plates (1042), each temperature measurement sub-plate (1042) is provided with one temperature measurement region (1042), and the plurality of temperature measurement sub-plates (1042) are arranged in a circumferential array around a center of the bearing plate (102).

6. The temperature measurement assembly (100) according to claim 1, wherein dimensions of a projection of each of the plurality of temperature measurement regions (1042) projected on the bearing plate (102) are compatible with dimensions of a projection of the heating coil (202) projected on the bearing plate (102).

7. A cooking apparatus (200), comprising:
a housing (204); and
a temperature measurement assembly (100) according to any one of claims 1 to 6.

8. The cooking apparatus (200) according to claim 7, wherein the housing (204) comprises:
a bottom housing (2042); and
an upper cover (2044) detachably connected to the bottom housing (2042), wherein the upper cover (2044) and the bottom housing (2042) are connected to form an accommodation cavity, a temperature measurement plate (104) and a control plate (112) of the temperature measurement assembly (100) are arranged in the accommodation cavity, and
a bearing plate (102) of the temperature measurement assembly (100) is attached to the upper cover (2044).

9. A temperature measurement assembly (100), comprising:
a bearing plate (102), wherein a first side of the bearing plate (102) is provided with a bearing region (1022), and a second side of the bearing plate (102) is provided with a plurality of temperature measurement regions (1042); and
a control plate (112) arranged on the second side of the bearing plate (102), wherein the control plate (112) and the bearing plate (102) are spaced; wherein
each temperature measurement region (1042) is filled with a resistance wire (1063) electrically connected to the control plate (112), projections of any two temperature measurement regions (1042) on the bearing plate (102) do not overlap, and a projection of the resistance wire (1063) in each temperature measurement region (1042) on the bearing plate (102) is in a closed shape.

10. The temperature measurement assembly (100) according to claim 9, wherein two lead terminals (1064) are led out from the resistance wire (1063) in each temperature measurement region (1042), with one of the two lead terminals (1064) grounded and the other of the two lead terminals (1064) being electrically connected to the control plate (112).

11. The temperature measurement assembly (100) according to claim 10, further comprising:
a connection pad (108) arranged on the second side of the bearing plate (102), wherein the connection pad (108) is electrically connected to the two lead terminals (1064) in each temperature measurement region (1042).

12. The temperature measurement assembly (100) according to claim 11, wherein the plurality of temperature measurement regions (1042) are arranged in a ring shape in a radial direction of the bearing plate (102), and the connection pad (108) is provided with a plurality of welding spots (1082), wherein the plurality of welding spots (1082) being electrically connected to the two lead terminals (1064) in each temperature measurement region (1042); wherein preferably the grounded lead terminals (1064) of all the temperature measurement regions (1042) are connected to one welding spot (1082).

13. The temperature measurement assembly (100) according to claim 11, further comprising:
a temperature measurement plate (104) arranged on the second side of the bearing plate (102), wherein the temperature measurement plate (104) is attached to the bearing plate (102), a side, facing the bearing plate (102), of the temperature measurement plate (104) is provided with the plurality of temperature measurement regions (1042) and the connection pad (108);wherein preferably the temperature measurement plate (104) comprises a plurality of temperature measurement sub-plates (1042), each temperature measurement sub-plate (1042) is provided with one temperature measurement region (1042), and the plurality of temperature measurement sub-plates (1042) are arranged in a circumferential array around a center of the bearing plate (102); wherein preferably each temperature measurement sub-plate (1042) is provided with one connection pad (108), and each connection pad (108) is provided with two welding spots (1082), wherein the two welding spots (1082) being respectively electrically connected to the two lead terminals (1064) of the temperature measurement region (1042).

14. A cooking apparatus (200), comprising:
a housing (204); and
a temperature measurement assembly (100) according to any one of claims 9 to 13; and
a heating coil (202) arranged on a side of the temperature measurement plate (104) of the temperature measurement assembly (100) away from a bearing plate (102).

15. The cooking apparatus (200) according to claim 14, wherein the housing (204) comprises:
a bottom housing (2042); and
an upper cover (2044) detachably connected to the bottom housing (2042), wherein the upper cover (2044) and the bottom housing (2042) are connected to form an accommodation cavity, a temperature measurement plate (104) and a control plate (112) of the temperature measurement assembly (100) are arranged in the accommodation cavity, and
a bearing plate (102) of the temperature measurement assembly (100) is attached to the upper cover (2044).
